# EUROPÄISCHE PATENTSCHRIFT

(11) **EP 2 547 929 B1**
(45) Veröffentlichungstag und Bekanntmachung des Hinweises auf die Patenterteilung: **15.02.2017**
(21) Anmeldenummer: 11708867.4
(22) Anmeldetag: 17.03.2011
(51) Int. Cl.: F16G 11/00

(54) **SEILENDVERBINDUNG**
CABLE END CONNECTION
ATTACHE TERMINALE DE CÂBLE

(30) Priorität: 17.03.2010 DE 102010011792
(43) Veröffentlichungstag der Anmeldung: 23.01.2013
(73) Patentinhaber: Universität Stuttgart, 70174 Stuttgart (DE)
(72) Erfinder: FINCKH-JUNG, Anita, 73326 Deggingen (DE); WINTER, Sven, 71576 Burgstetten (DE)
(74) Vertreter: DREISS Patentanwälte PartG mbB
(86) Internationale Anmeldenummer: PCT/EP2011/054054
(87) Internationale Veröffentlichungsnummer: WO 2011/113898

(56) Entgegenhaltungen:
- GB-A- 1 142 752
- GB-A- 1 193 185
- US-A- 5 039 255
- US-A1- 2004 088 847

## Beschreibung

Die vorliegende Erfindung betrifft eine Seilendverbindung nach dem Oberbegriff des Anspruchs 1. Derartige Seilendverbindungen werden für die Montage und Befestigung von Seilen in verschiedenartigsten Anwendungsbereichen eingesetzt. Faserseile werden an ihrem Seilende hierzu mit zusätzlichen mechanischen Konstruktionselementen verbunden, um beispielsweise eine Halterung des Seils in einem Bolzen zu ermöglichen.

Im Stand der Technik siehe GB1193185, DE19829688, US20040088847, DE1783505, GB1142752 und US5039255, sind verschiedene Arten von Seilendverbindungen bekannt. Beispielsweise werden bei sogenannten Seilschlössern mechanische Bauteile verwendet, in welchen das Seilende schlingenförmig eingelegt wird und sodann an einem Überlappungsbereich mit Schraubklemmen gesichert wird. Im Unterschied zu derartigen lösbaren Seilendverbindungen betrifft die vorliegende Erfindung eine unlösbare Seilendverbindung.

Als unlösbare Seilendverbindung wurden im Stand der Technik ebenfalls verschiedene Lösungen vorgeschlagen, wobei all diese Lösungen einen recht hohen Herstellungsaufwand und zusätzliche mechanische Konstruktionsteile erfordern: Beim sogenannten flämischen Auge wird die Verseilung der Filamente oder Drähte aufgelöst und schlingenförmig neu verflochten, wobei anschließend die so gebildete Seilschlinge über metallische Hülsen durch Verpressen noch gesichert wird. Bei einer anderen Art von unlösbarer Seilendverbindung werden konische Metallhülsen verwendet, in welche das besenförmig aufgespleiste Seilende eingesetzt wird und darin durch ein Vergießen mit einem metallischen Werkstoff oder mit einem Kunstharz fixiert wird. Die Haltekraft wird dabei insbesondere durch die formschlüssige Klemmung des Konus der Hülse, d. h. durch die Querpressung in Folge der Keilwirkung, hergestellt. Auch bei dieser letztgenannten Art von Seilendverbindung sind für verschiedene Anwendungen verschiedenartige zusätzliche mechanische Konstruktionselemente, d. h. vorgefertigte Hülsen in verschiedenen Formen und Größen, erforderlich. Außerdem ist das Vergießen des Seilendes im Inneren der Hülse mit flüssigem Metall relativ schwierig zu bewerkstelligen. Es erfordert auch extra hierfür geschultes Personal, um die Sicherheitsanforderungen derartiger Seilverbindungen zu gewährleisten.

Bei diesen bekannten Seilendverbindungen besteht ein weiteres Problem dahingehend, dass bei bestimmten Anwendungssituationen eine Messung von Kräften oder anderen Parametern erforderlich ist. Im Stand der Technik wurden hierzu bisher aufwendige mechanische Seilendverbindungen verwendet, beispielsweise in Form von den oben beschriebenen Seilschlössern, an denen noch zusätzliche Sensorbauteile von außen angebracht wurden, um beispielsweise den Belastungszustand an der Seilendverbindung und des Seiles selbst im Betrieb zu messen.

Eine Seilendverbindung mit den Merkmalen des Oberbegriffs des Anspruchs 1 ist aus der GB 1 193 185 A bekannt.

Demgegenüber ist es die Aufgabe der vorliegenden Erfindung, eine Seilendverbindung bereitzustellen, welche mit einer möglichst geringen Anzahl von Konstruktionselementen herstellbar ist bei einer dennoch hohen Belastbarkeit und insbesondere hohen Bruchkraft für sämtliche Durchmesserbereiche, wobei auch eine möglichst einfache Integration von Sensorelementen zur Erfassung von verschiedenen Betriebsparametern ermöglicht werden soll.

Diese Aufgabe wird mit einer Seilendverbindung nach der vorliegenden Erfindung gemäß den Merkmalen des Anspruchs 1 gelöst. Vorteilhafte Ausgestaltungen und Weiterbildungen der Erfindung sind Gegenstand der abhängigen Ansprüche.

Die erfindungsgemäße Seilendverbindung weist ein Endteil für eine Montage oder Halterung des aus mehreren verschlungenen Drähten oder Filamenten gebildeten Seils auf, welches an einem Seilende befestigt ist, wobei die Seilendverbindung dadurch gekennzeichnet ist, dass das Endteil ein Aufnahme-hülsenlos montiertes Teil aus einem gießfähigen, aushärtbaren Werkstoff ist, und wobei das Endteil ohne zusätzliche mechanische Verbindungselemente mit den Filamenten alleine durch ein Umgießen oder Anformen formschlüssig verbunden ist. Durch das Umgießen oder Anformen des Endteils mit einem gießfähigen, aushärtbaren Werkstoff kann die Form des Endteils im Wesentlichen beliebig gewählt werden. Dadurch, dass die ursprünglich miteinander verschlungenen Garne oder Filamente des Seilendes direkt durch ein Umgießen oder Anformen mit dem Werkstoff des Endteils verbunden werden, ist ein sicherer Halt des Seilendes in dem Endteil gewährleistet, ohne dass zusätzliche mechanische Konstruktionselemente wie Presshülsen, Schraubklemmen oder Haltehülsen erforderlich sind. Die Festigkeit und insbesondere die maximale Belastbarkeit mit Kräften ist bei der erfindungsgemäßen Seilendverbindung dennoch relativ hoch im Verhältnis zur Seilbruchkraft. Die Herstellung der Seilendverbindung ist außerdem relativ einfach und erfordert beispielsweise kein aufwendiges Neuverflechten der Filamente beziehungsweise Spleißen der Drähte, wie dies beim sogenannten flämischen Auge von dafür speziell ausgebildetem Personal durchgeführt werden musste. Nicht zuletzt kann in dem Endteil, welches aus einem gießfähigen, aushärtbaren Werkstoff wie zum Beispiel Kunststoff oder anderen Gussmaterialien hergestellt ist, eine einfache Integration von zusätzlichen Bauteilen wie zum Beispiel Sensorelemente direkt im Inneren des Materials des Endteils erfolgen. Auf diese Weise können aussagekräftige Messungen des Belastungszustandes, der Temperatur oder von ähnlichem vorgenommen werden, ohne dass an der Seilendverbindung von außen extra Sensorbauteile angebracht werden müssen. Aufgrund des direkten Umgießens oder Anformens des Endteils an dem Seilende sind auch keine zusätzlichen Bauteile wie Hülsen oder Schraubklemmen erforderlich, was einerseits die Teileanzahl und damit die Herstellungskosten reduziert, nicht zuletzt jedoch einen deutlich geringeren Herstellungsaufwand bedeutet, da beispielsweise für Presshülsen spezielle Vorrichtungen für das Verpressen zum Herstellen von Seilendverbindungen nach dem Stand der Technik erforderlich sind.

Das Endteil der Seilendverbindung ist durch Spritzgießen von Kunstharz in einer Gießform hergestellt. Dies ermöglicht eine vollständige Ausfüllung der Zwischenräume zwischen den Filamenten und damit einen sicheren Verbund zwischen den aufgedrillten Filamenten und dem Endteil. Die Filamente sind im Material des Endteils unter Vorspannung eingebettet und formschlüssig umgossen. Dafür werden die aufgedrillten Filamente des Seils im Inneren der Gussform eingelegt und unter Vorspannung dort während des Spritzgießens gehalten. Auf diese Weise kann eine gezielte und gespannte Ausrichtung der Filamente erreicht werden, was weiter die Festigkeit der Seilendverbindung verbessert.

Nach einer vorteilhaften Ausgestaltung der Erfindung sind die Filamente des Seilendes im Material des Endteils besenartig aufgefächert und insbesondere im Wesentlichen vollständig darin eingebettet. Durch die besenartige Auffächerung werden die Filamente des Seilendes in der gesamten Struktur des gegossenen Endteils verteilt. Zusammen mit der hiermit einhergehenden Beabstandung der Filamente und den so hergestellten Zwischenräumen, die vom Material des Endteils geschlossen werden, wird so ein hochfestes und dauerhaftes monolithisches Verbindungselement zur direkten Lastübertragung hergestellt. Durch die besenartige Auffächerung der Filamente des Seilendes erfolgt nicht zuletzt eine Verbreiterung der Abmessung des Endteils gegenüber dem Durchmesser des Seils selbst.

Nach einer weiteren vorteilhaften Ausgestaltung der Erfindung sind die Filamente des Seils im Bereich des Endteils aus der ursprünglichen Verseilung beziehungsweise Verflechtung aufgedreht und im Wesentlichen gleichmäßig verteilt angeordnet. Auf diese Weise wird eine möglichst großflächige formschlüssige Verbindung mit dem Material des Endteils gewährleistet. Die aufgedrillten Drähte oder Filamente können nach einem diesbezüglichen Aspekt der Erfindung auch gezielt in bestimmten Bereichen des Endteils konzentriert werden, so dass je nach Anwendungsfall und Lastverteilung im Endteil eine optimale Halterung und eine optimale Kraftaufnahme gewährleistet sind.

Nach einer weiteren vorteilhaften Ausgestaltung der Erfindung sind im Inneren des ausgehärteten Materials des Endteils mindestens bereichsweise Verstärkungselemente vorgesehen. Als Verstärkungselemente können verschiedene, dem Fachmann bekannte Materialien und Elemente verwendet werden. Vorteilhafterweise sind Verstärkungselemente und/oder Verstärkungsfasern in das Material des Endteils eingebettet und zusammen mit diesem ausgehärtet. Als Verstärkungsfasern können beispielsweise Karbonfasern oder Glasfasern verwendet werden. Die eingebetteten Verstärkungselemente erlauben eine lokale, bereichsweise Verstärkung des Materials. Nach einem vorteilhaften diesbezüglichen Aspekt der Erfindung sind die Verstärkungselemente entsprechend der Verteilung und dem Verlauf von Kräften im jeweiligen Belastungszustand der Seilendverbindung angeordnet und ausgerichtet. Die Verteilung und der Verlauf der Kräfte im Belastungszustand können entsprechend dem jeweiligen Anwendungsfall durch gezielten Einsatz von Verstärkungselementen so beeinflusst werden, dass eine insgesamt hochfeste Seilendverbindung bereitgestellt werden kann.

Nach einer weiteren vorteilhaften Ausgestaltung der erfindungsgemäßen Seilendverbindung kann in dem Material des Endteils mindestens ein Sensorelement zum Erfassen von Daten integriert werden. Ferner besteht die Möglichkeit zur Integration eines RFID-Systems (Radio Frequency Identification). Durch ein einfaches Einbetten von Sensorelementen mit beispielsweise Anschlusskabeln beim Gießen des Endteils in einer Gussform kann so eine direkte Integration von Erfassungsbauteilen erfolgen. Als Sensorelemente können jedwede dem Fachmann des Gebiets bekannte Sensoren eingesetzt werden, insbesondere Temperatursensoren, Kraftsensoren, Dehnungsmessstreifen und ähnliches. Auf diese Weise muss für die Messung von Betriebsparametern das Endteil nicht von außen mit extra Sensorbauteilen versehen werden. Die direkte Integration von Sensorelementen in das Material des Endteils hat zudem den Vorteil, dass genauere Messungen an jeweiligen neuralgischen Punkten an jeweils bekannten Schwachstellen je nach Form des Endteils vorgenommen werden können. Die Überwachung der Seilendverbindung, insbesondere hinsichtlich der Last, der Temperatur und der Dauerhaftigkeit im Betrieb, kann so deutlich verbessert werden. Nicht zuletzt sind die Sensorelemente durch das direkte Einbetten ins Innere des Materials des Endteils der Seilendverbindung vor Beschädigungen und Umgebungsbedingungen geschützt.

Nach einer weiteren vorteilhaften Ausgestaltung der erfindungsgemäßen Seilendverbindung ist das Endteil eine geschlossene Öse, welche ein Durchgangsloch aufweist. Vorzugsweise weist das Durchgangsloch nach dieser Ausgestaltung einen Ring oder eine Verstärkungshülse auf, die beispielsweise aus Metall hergestellt sein kann. Auf diese Weise kann eine sichere Bolzenverbindung mit der erfindungsgemäßen Seilendverbindung hergestellt werden. Die Hülse zur Verstärkung des Durchgangslochs vermeidet auch bei einem längeren Betrieb der Seilendverbindung mit Rotationsbewegungen eine Beschädigung des Materials des Endteils aufgrund von Reibungskräften. Bei dieser Form einer Seilendverbindung als geschlossene Öse sind die aufgedrillten Filamente oder Drähte des Seilendes vorzugsweise um das Durchgangsloch herum schlingenförmig im Material des Endteils verteilt. Auf diese Weise kann ähnlich wie bei dem im Stand der Technik bekannten flämischen Auge eine relativ hohe Zugfestigkeit der Seilendverbindung erreicht werden, ohne dass hierzu die dort nötige aufwendige Verspleißung aller Filamente erforderlich ist.

Nach einem vorteilhaften Aspekt der Erfindung sind die aufgedrehten bzw. aufgelösten Filamente im Bereich des Endteils paarweise angeordnet und miteinander verdreht. Nach der Verbindung mit dem Kunstharz in der Gießform wird so eine höhere Festigkeit erreicht, so dass die maximale Belastbarkeit der Seilendverbindung höher ist. Die paarweise angeordneten und verdrehten Enden der Filamente können nach einem weiteren Aspekt der Erfindung schlaufenförmig im Endteil um eine Hülse verlegt sein. Diese Variante ist von Vorteil bei einem Endteil mit Hülsenöffnung und erreicht damit eine noch größere Festigkeit im Vergleich zu einer einfachen, d.h. schlaufenlosen Einbettung der Enden der Filamente.
Nach einer weiteren vorteilhaften Ausgestaltung der Erfindung sind die Enden der Filamente im Bereich des Endteils beim Giessen in der Gießform unter Vorspannung gehalten. Durch solch ein gezieltes Vorspannen der Enden der Filamente kann die gewünschte Anordnung und Verteilung der eingegossen Enden der Filamente sichergestellt werden. Außerdem verhindert diese Maßnahme, dass es später im Endteil zu schädlichen Kraftumlagerungen oder Überlagerungen in den Seilenden kommt. Eine gleichmäßige Krafteinleitung sowie eine gute Verbindung und Halterung der Enden der Filamente im gegossenen Material des Endteils ist so gewährleistet. Nach einem diesbezüglichen weiteren Aspekt der Erfindung sind sowohl die Enden der Filamente im Bereich des Endteils als auch das Seil selbst beim Giessen in der Gießform unter Vorspannung gehalten. Dadurch wird weiter die Positionierung der Filamente im Endteil verbessert und eine noch höhere Zugsfestigkeit und damit auch Belastbarkeit der Seilendverbindung erreicht.

Gemäß der Erfindung kann die Vorspannung des Seils und/oder der Enden der Filamente in einem vordefinierten Bereich liegen. Durch diese Maßnahme wird die Verbindung und Vergießung des Seilendes weiter verbessert. Höhere Kräfte sind dadurch übertragbar. Die Vorspannung liegt gemäß einem vorteilhaften Ausführungsbeispiel in einem Bereich von einer Mindestbruchlast von 5% bis 50% der Mindestbruchlast des Seils bzw. der Filamente. Versuche des Erfinders haben bei diesen Werten sehr gute Ergebnisse ergeben, sowohl was den Formschluss zwischen den Teilen der Seilendverbindung betrifft als auch hinsichtlich der maximalen Zugspannung, welche mit ihr realisierbar ist.

Die Erfindung wird im Folgenden mehr im Detail anhand von verschiedenen Ausführungsbeispielen unter Bezugnahme auf die beigefügte Zeichnung beschrieben werden. In der Zeichnung zeigen:
- Fig. 1: eine Draufsicht eines ersten Ausführungsbeispiels einer erfindungsgemäßen Seilendverbindung;
- Fig. 2: eine Seitenansicht der Seilendverbindung nach dem Ausführungsbeispiel gemäß der Fig. 1;
- Fig. 3: eine Schnittansicht gemäß III-III der Seilendverbindung aus den Fig. 1 und 2;
- Fig. 4a und 4b: verschiedene alternative Ausführungsformen von erfindungsgemäßen Seilendverbindungen mit verschiedenen Formen des Endteils;

Fig. 5 eine schematische Ansicht zur Veranschaulichung einer Methode zur Herstellung eines Ausführungsbeispiels der erfindungsgemäßen Seilendverbindung; und

Fig. 6 eine Schnittansicht einer Seilendverbindung gemäß einer weiteren Ausführungsform der Erfindung.

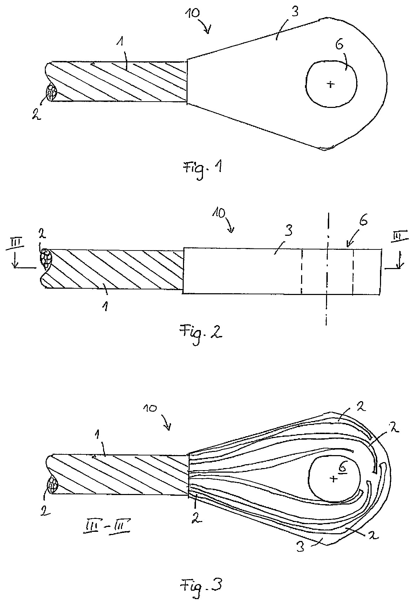

In den Fig. 1, 2 und 3 ist in einer Draufsicht, einer Seitenansicht und einer Schnittansicht zur Veranschaulichung des inneren Aufbaus ein erstes Ausführungsbeispiel einer erfindungsgemäßen Seilendverbindung 10 gezeigt. Die Seilendverbindung 10 weist bei diesem Ausführungsbeispiel ein Endteil 3 auf, das eine in etwa tropfenförmige Form hat. Das Ende eines Seils 1 ist mit einem aus Kunstharz durch Gießen hergestellten Endteil 3 versehen, das sich zunächst konisch erweitert, um an seinem Ende einen erweiterten, in etwa kreisförmigen Bereich zu bilden, in dem ein Durchgangsloch 6 gebildet ist. Das Durchgangsloch 6 dient der Aufnahme beispielsweise eines Befestigungsbolzens zur Montage des Seils 1 an seinem Einbauort. Das Seil 1 kann ein Kunststoffseil aus Filamenten 2 beziehungsweise Garnen sein. Andere Arten von Seilen 1 können ebenfalls mit einer erfindungsgemäßen Seilendverbindung 10 versehen werden.

Die erfindungsgemäße Seilendverbindung 10 weist ein aus gießfähigem, aushärtbarem Werkstoff hergestelltes Endteil 3 auf, das ohne zusätzliche mechanische Verbindungselemente mit den Filamenten 2 des Seils 1 durch ein einfaches Umgießen oder Anformen verbunden ist. Dazu werden am Seilende des Seils 1 die Filamente 2 aufgedröselt und in loser Form beispielsweise durch ein Umgießen in einer Gussform mit einem Kunstharz mit dem Endteil 3 verbunden. Die Filamente 2 werden dazu in geeigneter Art und Weise vor dem Gießen in eine Gussform eingelegt, so dass sie eine im Wesentlichen gleichmäßige Verteilung über die gesamte Breite und Länge des Endteils 3 aufweisen. Dies kann aus der schematischen Schnittansicht der Fig. 3 gesehen werden. Auf diese Art und Weise ergibt sich eine Seilendverbindung 10 mit hohen Festigkeitseigenschaften. Die Seilendverbindung 10 ist äußerst bruchfest und weist eine gute Dauerfestigkeit auch bei hohen Beanspruchungen auf. Die Seilendverbindung 10 nach diesem Ausführungsbeispiel weist einzelne Filamente 2 auf, die im Wesentlichen gleichmäßig im Inneren des Materials des Endteils 3 aufgeteilt sind. Die Filamente 2 werden dafür im Wesentlichen entlang der Richtung des Kräfteverlaufs und der Belastungsverteilung an dem in etwa tropfenförmigen Endteil 3 ausgerichtet, so dass die Filamente 2 weitestgehend dem Verlauf der Belastungskräfte folgen. Auf diese Weise können auch hohe Belastungsspitzen mit der erfindungsgemäßen Seilendverbindung 10 aufgenommen werden, ohne dass es zu einer Beschädigung oder zum Versagen kommt. Mit anderen Worten: Die Seilendverbindung 10 weist eine hohe Bruchfestigkeit auf. Neben den in das Material des Endteils 3 eingebetteten aufgedröselten Filamenten 2 können in das Kunstharz noch weitere Elemente beim Gießen mit eingebettet werden. Nach einer alternativen vorteilhaften Ausgestaltung der Erfindung können in dem Endteil 3 Verstärkungsfasern mit eingebettet, die zusammen mit den Enden der Filamente 2 des Seils 1 eine noch höhere Festigkeit der Seilendverbindung 10 bieten. Nach einem weiteren vorteilhaften Aspekt der Erfindung können in dem Material des Endteils 3, vorzugsweise einem aushärtenden Kunstharz, auch Sensorelemente mit integriert werden. Als Sensorelemente können beispielsweise Temperatursensoren, Kraftsensoren, Dehnungsmessstreifen, RFID-Schaltungen oder ähnliches mit eingebettet werden, so dass mit dem relativ einfach aufgebauten und sehr kompakten Endteil 3 der Seilendverbindung 10 auch Daten über die Betriebszustände und die Dauerfestigkeit einer Seilendverbindung und des hochfesten Zugglieds erfasst werden können. Das durch Gießen eines gießfähigen, aushärtbaren Werkstoffs an dem Seilende des Seils 1 angebrachte Endteil 3 kann beispielsweise über ein Formgießen oder ein Injektionsspritzgießen mit den dem Fachmann hierzu bekannten Mitteln hergestellt werden. Die Seilendverbindung 10 nach der Erfindung erfordert keine zusätzlichen mechanischen Bauteile wie Hülsen, Klemmschrauben oder Seilschlösser, wie sie im Stand der Technik zur Montage von Seilen verwendet wurden. Der Halt und die Fixierung des Endteils 3 der erfindungsgemäßen Seilendverbindung werden alleine durch das formschlüssige Umgießen der Filamente 2 des Endteils des Seils 1 hergestellt. Auf diese Weise wird eine sehr einfach aufgebaute kostengünstige Seilendverbindung 10 bereitgestellt, die in ihren Außenabmessungen auch äußerst kompakt ist und auf unterschiedliche Anwendungsfälle in der Form beliebig angepasst werden kann.

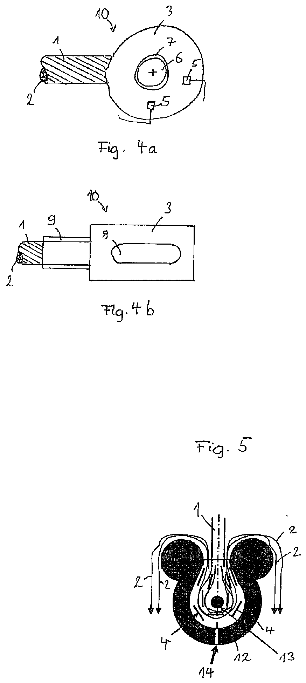

In den Fig. 4a und 4b sind in schematischen Draufsichten weitere Ausführungsbeispiele für erfindungsgemäße Seilendverbindungen 10 dargestellt. Die Fig. 4a zeigt eine Seilendverbindung 10 mit einem in etwa kreisrunden Endteil 3 mit einem mittigen Durchgangsloch 6. In dem Durchgangsloch 6 ist eine Hülse 7, beispielsweise aus Metall, eingesetzt, um so eine stabile drehbare Verbindung mit beispielsweise einem Bolzen zu ermöglichen. Auch bei diesem Ausführungsbeispiel nach der Fig. 4a sind die Filamente 2 des Seils 1 am Seilende aufgedröselt und im Inneren des Materials des hier kreisrunden Endteils 3 eingebettet, um über diese Einbettung einen Formschluss mit dem Endteil 3 herzustellen. Bei dem Ausführungsbeispiel der Fig. 4a sind des Weiteren zwei Sensoren 5 in dem Endteil 3 integriert, indem diese beim Gießen des Kunstharzes in die Form eingelegt werden. Die Sensoren 5 können beispielsweise ein Temperatursensor und ein Kraftsensor sein und weisen jeweils schematisch in der Fig. 4a dargestellte Verbindungsleitungen auf, über welche die Erfassungssignale an eine Steuerungseinheit (nicht dargestellt) weitergegeben werden können. Mit den Sensoren 5 können somit im Betrieb der Seilendverbindung 10 jeweilige Temperaturen und Kräfteverhältnisse erfasst werden, um bei Bedarf die Seilendverbindung 10 auszutauschen oder auf die Belastung einzuwirken. Damit kann mit der erfindungsgemäßen Seilendverbindung nicht nur eine hochfeste Seilendverbindung 10 bereitgestellt werden, sondern zudem lässt sich hiermit auf einfache Art und Weise eine permanente Lastüberwachung, Temperaturüberwachung oder Überwachung der Dauerfestigkeit realisieren, ohne dass von außen separate Sensorelemente aufwendig an der Seilendverbindung 10 oder am Seil 1 angebracht werden müssen.

Die Fig. 4b zeigt in einer schematischen Draufsicht ein weiteres Ausführungsbeispiel einer möglichen Form einer erfindungsgemäßen Seilendverbindung 10. Dieses Ausführungsbeispiel ist gekennzeichnet durch ein in etwa rechteckiges Endteil 3 mit einem mittigen Langloch 8. Am Übergangsbereich zum Seil 1 ist hier eine Ummantelung 9, vorzugsweise aus dem gleichen Material wie das Endteil 3, vorgesehen. Durch die Ummantelung 9 wird das Seil vor einer Beschädigung und insbesondere vor einem unerwünschten Abknicken in diesem Bereich geschützt. Auch bei diesem Ausführungsbeispiel sind die Filamente 2 des Seils 1 durch ein direktes Eingießen in ein Kunstharz mit dem Endteil 3 verbunden. Die Seilendverbindung 10 erfordert damit keine zusätzlichen Montageelemente wie Klemmhülsen oder Schraubklemmen, um das Endteil 3 der Seilendverbindung 10 mit dem Seil 1 zu koppeln.

Die Fig. 5 zeigt in einer schematischen Darstellung eine mögliche Methode zur Herstellung der erfindungsgemäßen Seilendverbindung 10 mit einem Endteil 3 aus beispielsweise Kunstharz. Das Seil 1 wird mit seinen aufgedröselten Filamenten 2 in eine nach oben offene Gießform um einen mittig vorgesehenen Bolzen oder Ring 13 eingelegt, der zur Herstellung eines Durchgangslochs 6 in dem Endteil 3 dient. Die aufgedröselten Filamente 2 werden um den Ring 13 herum im Wesentlichen gleichmäßig im Inneren des Raums der Gießform 12 eingelegt und verteilt, so dass ausreichende Zwischenräume und Abstände zwischen den Filamenten 2 entstehen, die von dem Material, das anschließend eingespritzt wird, umschlossen werden. Zum Einbringen des gießfähigen Materials ist eine bodenseitige Injektionsöffnung 14 vorgesehen, über welche eine Kunstharzinjektion erfolgt. Vorher können noch je nach Bedarf Verstärkungselemente 4, vorzugsweise in Ausrichtung entlang der Kräftelinie bei der Beanspruchung, in die Form 12 mit eingelegt werden, so dass das so hergestellte Endteil 3 eine noch höhere Festigkeit aufweist. Bei dieser beispielhaften Methode nach der Fig. 5 werden die Filamente 2 nach außen aus der Form 12 herausgeführt und unter Vorspannung während des Gießens gehalten. Durch die Vorspannung der Filamente 2 des Seils 1 wird einerseits eine gezielte Ausrichtung der Filamente im Material des Endteils 3 der Seilendverbindung 10 erreicht. Zum anderen dient die Vorspannung der Filamente 2 dazu, eine relative Verschiebung zwischen Filamenten 2 und ausgehärtetem Endteil 3 und damit eine ungleiche Belastung der Seilendverbindung 10 zu vermeiden. Gleichfalls sind durch die Vordehnung des Seilstrangs 1 während des Vorspannvorgangs höhere ertragbare Zugspannungen im Vergussmaterial des Endteils 3 möglich.

Alternative Methoden zur Herstellung der erfindungsgemäßen Seilendverbindung 10 können ebenfalls eingesetzt werden, solange die Verbindung durch ein Umgießen oder Anformen der aufgedröselten Filamente 2 des Seils 1 erfolgt. Selbstverständlich sind die beschriebenen Merkmale der einzelnen Ausführungsbeispiele auch untereinander kombinierbar. Dies gilt insbesondere für die Form des Endteils 3, die Verwendung von Verstärkungsfasern 4 und die Lage und Ausrichtung der aufgedröselten Filamente 2 im Inneren des Materials des Endteils 3.

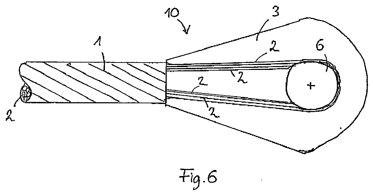

In der Fig. 6 ist eine weitere Ausführungsform einer erfindungsgemäßen Seilendverbindung 10 in einer Schnittansicht ähnlich zu der Fig. 3 dargestellt. Bei diesem Ausführungsbeispiel sind die Enden der Filamente 2 aus der Verseilung aufgelöst und paarweise miteinander verdreht und dann anschließend um die Öffnung 6 bzw. eine Hülse in der Öffnung 6 herum gelegt. Sie bilden dadurch eine Art geschlossen Schlaufenform im eingegossenen Material des Endteils 3. Außerdem sind die Enden der Filamente 2 beim Gießvorgang unter eine Vorspannung gesetzt, so dass sie sich im Wesentlichen geradlinig ausrichten. Die eingegossenen Filamente 2 sind damit in der gewünschten Lage angeordnet und ausgerichtet. Die Enden der Filamente 2 können alleine unter Spannung eingegossen werden. Alternativ werden sowohl das Seil als auch die Enden der schlaufenförmig verlegten Filamente 2 unter eine gezielte Vorspannung gesetzt, solang das Kunstharz noch nicht ausgehärtet ist. Vorzugsweise sind die Filamente 2 im Wesentlichen gemäß einem Kräfteverlauf bei Belastung der Seilendverbindung 10 ausgerichtet, so dass eine noch bessere Festigkeit und hohe maximale Lastaufnahme hierdurch erreicht wird.

## Patentansprüche

1. Seilendverbindung (10) mit einem Seil (1), welches aus mehreren miteinander verschlungenen Filamenten (2) oder Drähten aufgebaut ist, wobei ein Endteil (3) für eine Montage oder Halterung des Seils (1) vorgesehen ist, das an einem Seilende befestigt ist, wobei das Endteil (3) ein hülsenlos montiertes Teil aus einem gießfähigen, aushärtbaren Werkstoff ist und dass das Endteil (3) ohne zusätzliche mechanische Verbindungselemente mit den Filamenten (2) oder Drähten alleine durch ein Umgießen oder Anformen formschlüssig verbunden ist, wobei die Filamente oder Drähte im Bereich des Endteils aus dem ursprünglichen Verseilungsverbund aufgelöst und im Wesentlichen gleichmäßig verteilt angeordnet sind, wobei das Endteil (3) durch Spritzgießen von Kunstharz in einer Gießform hergestellt ist,
**dadurch gekennzeichnet, dass** die aufgedrillten Drähte oder Filamente (2) des Seils (1) im Inneren der Gießform eingelegt und die Enden der Filamente (2) oder Drähte im Bereich des Endteils (2) beim Gießen in der Gießform unter Vorspannung derart gehalten sind, dass die Drähte oder Filamente (2) im Material des Endteils (3) unter Vorspannung eingebettet und formschlüssig umgossen sind.

2. Seilendverbindung (10) nach Anspruch 1, **dadurch gekennzeichnet, dass** die Filamente (2) oder Drähte im Material des Endteils (3) besenartig aufgefächert und insbesondere im Wesentlichen vollständig darin eingebettet sind.

3. Seilendverbindung (10) nach Anspruch 1 oder 2, **dadurch gekennzeichnet, dass** das Endteil (3) im Innern des ausgehärteten Materials mindestens bereichsweise mit Verstärkungselementen, insbesondere mit Verstärkungsfasern (4), versehen ist.

4. Seilendverbindung (10) nach Anspruch 3, **dadurch gekennzeichnet, dass** Verstärkungsfasern (4) und/oder Verstärkungselemente vorgesehen sind, welche entsprechend dem Verlauf und der Verteilung von Kräften im Belastungszustand der Seilendverbindung (10) angeordnet und ausgerichtet sind.

5. Seilendverbindung (10) nach einem der vorangegangenen Ansprüche, **dadurch gekennzeichnet, dass** in dem Material des Endteils (3) mindestens ein Sensorelement (5) zum Erfassen von Daten oder ein RFID-Bauteil integriert ist.

6. Seilendverbindung (10) nach einem der vorangegangenen Ansprüche, **dadurch gekennzeichnet, dass** das Endteil (3) eine geschlossene Öse mit einem zentralen Durchgangsloch (6) aufweist.

7. Seilendverbindung (10) nach einem der vorangegangenen Ansprüche, **dadurch gekennzeichnet, dass** die aufgelösten Filamente (2) im Bereich des Endteils (3) paarweise angeordnet und miteinander verdreht sind.

8. Seilendverbindung (10) nach einem der vorherigen Ansprüche, **dadurch gekennzeichnet, dass** sowohl die Enden der Filamente (2) Feder Drähte im Bereich des Endteils (2) als auch das Seil (1) beim Giessen in der Gießform unter Vorspannung gehalten sind.

9. Seilendverbindung (10) nach einem der vorangegangenen Ansprüche, **dadurch gekennzeichnet, dass** die Vorspannung des Seils (1) und/oder der Enden der Filamente (2) oder Drähte in einem definierten Bereich von einer Mindestbruchlast von 5% bis 50% liegt.

## Claims

1. A cable end connection (10) for a cable (1) that is composed from a plurality of intertwined filaments (2) or wires, wherein an end part (3) for installing or supporting said cable (1) that is fastened to one end (3) of said cable is provided, said end part, which is mounted without a sleeve, is made from a castable, curable material, and is connected without additional mechanical connecting elements in a form-fitting manner to said filaments (2) or wires solely by being cast around or moulded on,
wherein said filaments or wires are released from an original stranding assembly in a region of said end part and distributed substantially uniformly,
wherein said end part (3) is produced in a casting mould by injection moulding of synthetic resin,
**characterized in that** the twisted wires or filaments (2) of said cable (1) are inserted into the interior of said casting mould and the ends of said filaments (2) or wires are held under pre-tension in the region of said end part (3) during the casting in said casting mould in such a way that said wires or filaments (2) are embedded into the material of said end part (3) under pre-tension and are encapsulated therein in a form-fitting manner.

2. The cable end connection (10) according to claim 1, **characterized in that** said filaments (2) or wires are fanned-out in a manner of a broom in the material of said end part (3) and are substantially completely embedded therein.

3. The cable end connection (10) according to claim 1 or 2, **characterized in that** said end part (3) is provided, at least in regions, in the interior of the curable material with a plurality of reinforcement elements, in particular with reinforcement fibers (4).

4. The cable end connection (10) according to claim 3, **characterized in that** reinforcement fibers (4) and/or reinforcement elements are provided which are arranged and aligned corresponding to the course and distribution of forces in a loaded state of said cable end connection (10).

5. The cable end connection (10) according to any of the preceding claims, **characterized in that** at least one sensor element (5) for recording data or an RFID component is integrated in the material of said end part (3).

6. The cable end connection (10) according to any of the preceding claims, **characterized in that** said end part (3) includes a closed grommet with a central through-hole (6).

7. The cable end connection (10) according to any of the preceding claims, **characterized in that** the released filaments (2) are arranged in pairs and twisted with one another in the region of said end part (3).

8. The cable end connection (10) according to any of the preceding claims, **characterized in that** both ends of said filaments (2) or wires in the region of said end part (3) and said cable (1) are held under the pre-tension during the casting in said casting mould.

9. The cable end connection (10) according to any of the preceding claims, **characterized in that** the pre-tension of said cable (1) and/or the ends of said filaments (2) lies within a defined range from about 5 % to about 50 % of a minimum breaking load.

## Revendications

1. Agrafe terminale de câble (10) comprenant un câble (1), lequel est composé de plusieurs filaments (2) ou fils entrelacés les uns avec les autres, une partie terminale (1), qui est fixée à une extrémité de câble, étant prévue pour un montage ou une retenue du câble (1), la partie terminale (3) étant une pièce montée sans gaine en matériau coulant durcissable, et la partie terminale (3) étant reliée par complémentarité de formes aux filaments (2) ou aux fils uniquement par enrobage ou formage sans éléments de liaison mécanique supplémentaires, les filaments ou les fils étant déliés du composite de câblage initial dans la zone de la partie terminale et répartis de manière sensiblement uniforme,
la partie terminale (3) étant fabriquée par moulage par injection de résine synthétique dans un moule,
**caractérisée en ce que** les fils ou les filaments (2) torsadés du câble (1) sont insérés à l'intérieur du moule et les extrémités des filaments (2) ou des fils sont retenues dans la zone de la partie terminale (2) lors de la coulée dans le moule sous l'effet d'une précontrainte, de telle sorte que les fils ou les filaments (2) sont incorporés dans le matériau de la partie terminale (3) sous l'effet d'une précontrainte et enrobés par coopération de formes.

2. Agrafe terminale de câble (10) selon la revendication 1, **caractérisée en ce que** les filaments (2) ou les fils sont placés en éventail à la façon d'un balai dans le matériau de la partie terminale (3) et y sont incorporés en particulier de manière sensiblement totale.

3. Agrafe terminale de câble (10) selon la revendication 1 ou 2, **caractérisée en ce que** la partie terminale (3) est pourvue à l'intérieur du matériau durci, au moins par endroits, d'éléments de renforcement, en particulier de fibres de renforcement (4).

4. Agrafe terminale de câble (10) selon la revendication 3, **caractérisée en ce que** des fibres de renforcement (4) et/ou des éléments de renforcement sont prévus, lesquels sont agencés et orientés de manière correspondant au tracé et à la répartition des forces dans l'état de sollicitation de l'agrafe terminale de câble (10).

5. Agrafe terminale de câble (10) selon l'une quelconque des revendications précédentes, **caractérisée en ce qu'**au moins un élément de détection (5) destiné à détecter des données ou un composant RFID est intégré dans le matériau de la partie terminale (3).

6. Agrafe terminale de câble (10) selon l'une quelconque des revendications précédentes, **caractérisée en ce que** la partie terminale (3) comprend un oeillet fermé présentant un trou de passage central (6).

7. Agrafe terminale de câble (10) selon l'une quelconque des revendications précédentes, **caractérisée en ce que** les filaments (2) déliés sont agencés par paires dans la zone de la partie terminale (3) et torsadés les uns avec les autres.

8. Agrafe terminale de câble (10) selon l'une quelconque des revendications précédentes, **caractérisée en ce qu'**aussi bien les extrémités des filaments (2) ou des fils dans la zone de la partie terminale (2) que le câble (1) sont retenus sous l'effet d'une précontrainte dans le moule lors de la coulée.

9. Agrafe terminale de câble (10) selon l'une quelconque des revendications précédentes, **caractérisée en ce que** la précontrainte du câble (1) et/ou des extrémités des filaments (2) ou des fils se situe dans une plage définie par une charge de rupture minimale de 5 % à 50 %.
